# EUROPEAN PATENT SPECIFICATION

(11) **EP 1 299 919 B1**
(45) Date of publication and mention of the grant of the patent: **17.03.2004**
(21) Application number: 01940777.4
(22) Date of filing: 20.06.2001
(51) Int. Cl.: H01M 8/10

(54) **IMPROVED MATERIAL FOR ELECTRODE MANUFACTURE**
VERBESSERTES MATERIAL FÜR ELEKTRODEN HERSTELLUNGSVERFAHREN
MATERIAU AMELIORE POUR LA FABRICATION D'ELECTRODE

(30) Priority: 08.07.2000 GB 0016750
(43) Date of publication of application: 09.04.2003
(73) Proprietor: Johnson Matthey Public Limited Company, London SW1Y 5BQ (GB)
(72) Inventor: GASCOYNE, John, Malcolm, High Wycombe, Bucks HP14 4BB (GB); HARDS, Graham, Alan, Reading RG4 9EB (GB); RALPH, Thomas, Robinson, Reading RG30 2QJ (GB)
(74) Representative: Wishart, Ian Carmichael
(86) International application number: PCT/GB2001/002719
(87) International publication number: WO 2002/005375

(56) References cited:
- EP-A- 0 791 974
- DE-A- 4 206 490

## Description

The present invention relates to an improved process for preparing an electrocatalyst layer and in particular the preparation of higher performance catalyst layer structures for application in fuel cells and other electrochemical devices.

Electrochemical cells invariably comprise at their fundamental level a solid or liquid electrolyte and two electrodes, the anode and cathode, at which the desired electrochemical reactions take place. A fuel cell is an energy conversion device that efficiently converts the stored chemical energy of its fuel into electrical energy by combining either hydrogen, stored as a gas, or methanol stored as a liquid or gas, with oxygen to generate electrical power. The hydrogen or methanol is oxidised at the anode and the oxygen is reduced at the cathode of the electrochemical cell. In these cells gaseous reactants and/or products have to be diffused into and/or out of the cell electrode structures. The electrodes therefore arc specifically designed to be porous to gas diffusion in order to optimise the contact between the reactants and the reaction sites in the electrode to maximise the reaction rate. The electrolyte which has to be in contact with both electrodes to maintain electrical contact in the fuel cell may be acidic or alkaline, liquid or solid, in nature. The proton exchange membrane fuel cell (PEMFC) is the most likely type of fuel cell to find wide application as a more efficient and lower emission power generation technology in a range of markets including stationary and portable power devices and as an alternative to the internal combustion engine in transportation. In the PEMFC, whether hydrogen or methanol fuelled, the electrolyte is a solid proton-conducting polymer membrane, commonly based on perfluorosulphonic acid materials.

In the PEMFC the combined laminate structure formed from the membrane and the two electrodes is known as a membrane electrode assembly (MEA). The MEA will typically comprise several layers, but can in general be considered, at its basic level, to have five layers, which are defined principally by their function. On either side of the membrane an anode and cathode electrocatalyst is incorporated to increase the rates of the desired electrode reactions. In contact with the electrocatalyst containing layers, on the opposite face to that in contact with the membrane, are the anode and cathode gas diffusion substrate layers. The anode gas diffusion substrate is designed to be porous and to allow the reactant hydrogen or methanol to enter from the face of the substrate exposed to the reactant fuel supply, and then to diffuse through the thickness of the substrate to the layer which contains the electrocatalyst, usually platinum metal based, to maximise the electrochemical oxidation of hydrogen or methanol. The anode electrocatalyst layer is also designed to comprise some level of the proton-conducting electrolyte in contact with the same electrocatalyst reaction sites. With acidic electrolyte types protons are produced as the product of the reaction occurring at the anode and these can then be efficiently transported from the anode reaction sites through the electrolyte to the cathode layers. The cathode gas diffusion substrate is also designed to be porous and to allow oxygen or air to enter the substrate and diffuse through to the electrocatalyst layer reaction sites. The cathode electrocatalyst combines the protons with oxygen to produce water and is also designed to comprise some level of the proton-conducting electrolyte in contact with the same electrocatalyst reaction sites. Product water then has to diffuse out of the cathode structure. The structure of the cathode has to be designed such that it enables the efficient removal of the product water. If water builds up in the cathode, it becomes more difficult for the reactant oxygen to diffuse to the reaction sites, and thus the performance of the fuel cell decreases. In the case of methanol fuelled PEMFCs, additional water is present due to the water contained in the methanol, which can be transported through the membrane from the anode to the cathode side. The increased quantity of water at the cathode requires removal. However, it is also the case with proton-conducting membrane electrolytes, that if too much water is removed from the cathode structure, the membrane can dry out and the performance of the fuel cell also decreases.

The complete MEA can be constructed by several methods. The electrocatalyst layers can be bonded to one surface of the gas diffusion substrates to form what is known as a gas diffusion electrode. The MEA is then formed by combining two gas diffusion electrodes with the solid proton-conducting membrane. Alternatively, the MEA may be formed from two porous gas diffusion substrates and a solid proton-conducting polymer membrane catalysed on both sides (also referred to as a catalyst coated membrane or CCM); or indeed the MEA may be formed from one gas diffusion electrode and one gas diffusion substrate and a solid proton-conducting polymer catalysed on the side facing the gas diffusion substrate.

The materials typically used in the fabrication of the gas diffusion substrate layers of an MEA comprise high density materials such as rigid carbon fibre paper (e.g. Toray TGP-H-60 or TGP-H-90 from Toray Industries, Japan) or woven carbon cloths, such as Zoltek PWB-3 (Zoltek Corporation, 3101 McKelvey Road, St. Louis, Missouri 63044, USA). Substrates such as these are usually modified with a particulate material either embedded within the fibre network or coated on to the large planar surfaces, or a combination of both. Typically these particulate materials comprise a carbon black and polymer mix. The particulate carbon black material is, for example, an oil furnace black such as Vulcan XC72R (from Cabot Chemicals, Billerica, Ma, USA) or an acetylene black such as Shawinigan (from Chevron Chemicals, Houston, Texas, USA). The polymer most frequently used is polytetrafluoroethylene (PTFE). The coating, or embedding, is carried out in order to improve the water management properties, improve gas diffusion characteristics, to provide a continuous surface on which to apply the catalyst layer and to improve the electrical conductivity. More recently, electrode structures based on gas diffusion substrates comprising a non-woven network of carbon fibres (carbon fibre structures such as Optimat 203, from Technical Fibre Products, Kendal, Cumbria, UK) with a particulate material embedded within the fibre network as disclosed in EP 0 791 974 have shown comparable performances to structures based on carbon fibre paper or cloth.

The electrocatalyst materials for the anode and cathode structures typically comprise precious metals, in particular platinum, as these have been found to be the most efficient and stable electrocatalysts for all low-temperature fuel cells such as the PEMFC. Platinum is employed either on its own as the only electrocatalyst metal or in combination with other precious metals or base metals. The platinum based electrocatalyst is provided as very small particles (∼20-50Å) of high surface area, which are usually distributed on and supported by larger macroscopic conducting carbon particles to provide a desired catalyst loading. Conducting carbons are the preferred materials to support the catalyst. Particulate carbon black materials typically employed include Vulcan XC72R and Shawinigan. It is also possible that the platinum based electrocatalyst may not incorporate a support, and in this case it is referred to as an unsupported Pt elcctrocatalyst.

Each MEA in the PEMFC is sandwiched between electrically conducting flow field plates which are conventionally based on carbon and contain channels that feed the MEA with the reactants and through which the products are removed. Since each MEA is typically required to deliver at least 500mAcm⁻² at 0.6 -0.7 V, usually between 10 to 300 such MEAs are located between flow field plates to form stacks. These stacks are combined electrically in series or parallel to give the desired power output for a given application.

Realising the high current densities that are potentially available requires that all the components of the MEA structure are able to perform at their maximum practical level. Thus, within the electrocatalyst layer, the proportion of the catalyst surface in contact with the proton-conducting polymer electrolyte needs to be as high as practically possible, whilst still ensuring access to the catalyst surface for the reactant gas or liquid. The level of hydration of the proton-conducting polymer, within the electrocatalyst layer, must also be maintained at the correct level to ensure that there is sufficient water available for the proton transport processes. The electron conductivity of the electrocatalyst layer, in both the x- y and z directions, is also very important for maximising the cell potential and needs to be maintained at the highest level possible. The dichotomy between the need to maximise the catalyst dispersion and therefore maximise the contact between the catalyst and the insulating proton-conducting polymer, and the need to maximise electron conduction both between the catalyst particles and between the catalyst layer and the gas diffusion substrate is one that has not been readily resolved.

It is the aim of the present invention to provide an improved process that uses an electrocatalyst material (hereinafter referred to as "electrocatalyst ink") to provide an electrocatalytic layer with improved electron conductivity in both the x-y and z directions, when incorporated as part of an MEA. Accordingly, the present invention provides a process for preparing an electrocatalytic layer comprising applying an electrocatalyst ink to a substrate, wherein the electrocatalyst ink comprises one or more electrocatalyst metals and one or more proton- conducting polymers, characterised in that the electrocatalyst ink further comprises an electron-conducting fibrous material.

The term "ink" as used to describe the present invention implies a material that is dispersed in a vehicle carrier and that can be applied to a substrate by a variety of methods, such as filtration, vacuum deposition, spray deposition, casting, extrusion, rolling or printing such that the final ink formulation is capable of being used in a high volume production process for the deposition of an electrocatalytic layer.

The term "electrocatalyst" will be well understood by a person skilled in the art to mean a catalyst that when incorporated into a gas diffusion electrode facilitates an electrochemical reaction. Electrocatalyst metals for use in the present invention may be selected from
(i) the platinum group metals (i.e. platinum, palladium, rhodium, ruthenium, iridium and osmium),
(ii) gold or silver,
(iii) a base metal or base metal oxide,
or an alloy or mixture comprising one or more of these metals. The preferred electrocatalyst metal for use in the present invention is platinum. The electrocatalyst metal may be unsupported, or supported on a conductive substrate, and preferably is supported on, for example a high surface area particulate carbon. The electrocatalysts typically used in PEM fuel cells are either supported metal catalysts, wherein the metal particles are dispersed over the surface of a carbon black, or unsupported finely divided metal blacks. In the case of the supported catalysts, the individual particles or nodules of carbon are between 10 and 100 nanometres in diameter and the typical aggregate, formed by the fusion of the individual particles has the largest dimension, in at least one direction, in the range 100 to 500 nanometres (0.1 - 0.5 microns) (T. J. Fabish and D. E. Schleifer, Carbon, Vol. No.1 19 -38, 1984). The unsupported metal blacks typically have individual particles with dimensions in the order of 0.001 to 0.01 microns, with aggregates of such particles forming clusters in the range 0.1 to 5 microns.

The fibrous material for use in the present invention suitably contacts two or more aggregates of electrocatalyst, thereby enhancing the electron conductive pathway of the electrocatalytic layer.

The fibrous material is suitably composed of electrically conducting carbon fibres typically having bulk electrical resistivities in the range 1x10⁻² to 1x10⁻⁵ ohm cm. These materials are commonly supplied as carbon wool or milled fibres as, for example type FRC 15 supplied by Le Carbone (Great Britain) Ltd., Portslade, Sussex, UK. Typically such fibres are of average length less than 2.0mm and suitably are of average length less than 1.0mm, preferably less than 0.5mm. The fibres suitably have a minimum average length of 50 microns, preferably 100 microns. The diameter of the fibres is typically in the range of 0.1 microns to 20 microns, preferably in the range of 0.4 microns to 10 microns. In addition to the intrinsic electron conductivity of the fibrous material it has also been observed that the incorporation of fibrous material into the electrocatalytic material improves water retention within the catalyst layer, and hence indirectly improves the proton conductivity within the catalyst layer.

The proton-conducting polymers suitable for use in the present invention may include, but are not limited to:
1) Polymers which have structures with a substantially fluorinated carbon chain optionally having attached to it side chains that are substantially fluorinated. These polymers contain sulphonic acid groups or derivatives of sulphonic acid groups, carboxylic acid groups or derivatives of carboxylic acid groups, phosphonic acid groups or derivatives of phosphonic acid groups, phosphoric acid groups or derivatives of phosphoric acid groups and/or mixtures of these groups. Perfluorinated polymers include Nafion®, Flemion® and Aciplex® commercially available from E. I. DuPont de Nemours (U.S. Patents 3,282,875; 4,329,435; 4,330,654; 4,358,545; 4,417,969; 4,610,762; 4,433,082 and 5,094,995), Asahi Glass KK and Asahi Chemical Industry respectively. Other polymers include those covered in U.S. Patent 5,595,676 (Imperial Chemical Industries plc) and U.S. Patent 4,940,525 (Dow Chemical Co.)
2) Perfluorinated or partially fluorinated polymers containing aromatic rings such as those described in WO 95/08581, WO 95/08581 and WO 97/25369 (Ballard Power Systems) which have been functionalised with SO₃H, PO₂H₂, PO₃H₂, CH₂PO₃H₂, COOH, OSO₃H, OPO₂H₂, OPO₃H₂. Also included are radiation or chemically grafted perfluorinated polymers, in which a perfluorinated carbon chain, for example, PTFE, fluorinated ethylenepropylene (FEP), tetrafluoroethylene-ethylene (ETFE) copolymers, tetrafluoroethylene-perfluoroalkoxy (PFA) copolymers, poly(vinyl fluoride) (PVF) and poly(vinylidene fluoride) (PVDF) is activated by radiation or chemical initiation in the presence of a monomer, such as styrene, which can be functionalised to contain an ion exchange group.
3) Fluorinated polymers such as those disclosed in EP 0 331 321 and EP 0345 964 (Imperial Chemical Industries plc) containing a polymeric chain with pendant saturated cyclic groups and at least one ion exchange group which is linked to the polymeric chain through the cyclic group.
4) Aromatic polymers such as those disclosed in EP 0 574 791 and US Patent 5,438,082 (Hoechst AG) for example sulphonated polyaryletherketone. Also aromatic polymers such as polyether sulphones which can be chemically grafted with a polymer with ion exchange functionality such as those disclosed in WO 94/16002 (Allied Signal Inc.).
5) Nonfluorinated polymers include those disclosed in U.S. Patent 5,468,574 (Dais Corporation) for example hydrocarbons such as styrene-(ethylene-butylene)-styrene, styrene-(ethylene-propylene)-styrene and acrylonitrile-butadiene-styrene, co- and terpolymers where the styrene components are functionalised with sulphonate, phosphoric and/or phosphonic groups.
6) Nitrogen containing polymers including those disclosed in U.S. Patent 5,599,639 (Hoechst Celanese Corporation), for example, polybenzimidazole alkyl sulphonic acid and polybenzimidazole alkyl or aryl phosphonate.
7) Any of the above polymers which have the ion exchange group replaced with a sulphonyl chloride (SO₂Cl) or sulphonyl fluoride (SO₂F) group rendering the polymers melt processable. The sulphonyl fluoride polymers may form part of the precursors to the ion exchange membrane or may be arrived at by subsequent modification of the ion exchange membrane. The sulphonyl halide moieties can be converted to a sulphonic acid using conventional techniques such as, for example, hydrolysis.

The process of the invention may further comprise the step of preparing the electrocatalyst ink by a process comprising mixing the one or more electrocatalyst materials with the one or more proton-conducting polymers and the electron-conducting fibrous material in a liquid medium, which may be aqueous or organic.

The process of the invention can provide a gas diffusion electrode, which may be an anode or a cathode, comprising a gas diffusion substrate and an electrocatalytic layer prepared according to the present invention. The method for preparing such an electrode comprises applying the electrocatalyst ink to the substrate (e.g. of carbon fibre paper or a solid polymer electrolyte membrane) by any method known in the art and including filtration, vacuum deposition, spray deposition, casting, extrusion, rolling or printing.

The process of the invention can also provide a catalyst coated membrane comprising a solid polymer membrane and an electrocatalytic layer prepared according to a process comprising applying the electrocatalyst ink to one or both sides of the membrane by any method known in the art and including filtration, vacuum deposition, spray deposition, casting, rolling or printing. The process of the invention can also be used to provide i) a membrane electrode assembly comprising an electrocatalytic layer prepared using the process of the invention, and ii) a fuel cell comprising an electrocatalytic layer prepared using the process of the present invention.

The process of the present invention is advantageously used to prepare electrocatalytic layers for use in PEM fuel cells, but may be used to form electrocatalyst layers in any type of fuel cell that operates below 300°C, for example phosphoric acid fuel cells.

The invention will now be described by way of example only which is not intended to be limiting thereof.

In the following examples the electrocatalyst layers were pre-formed and subsequently applied to a perfluorinated proton-conducting membrane prior to measuring the electrical resistance of the layer thus replicating the catalyst layer structure present in a fuel cell.

### COMPARATIVE EXAMPLE 1

An electrocatalyst inkfor use as the electrocatalyst layer was provided by dispersing 100g of a 40 weight % platinum on carbon black (Johnson Matthey FC40) in 310g of a 9.7wt% solution of Nafion EWI100 (E. I. DuPont De Nemours & Co.) dispersion in water, according to methods described in EP 0731520. The particulate catalyst was dispersed using a high-shear mixer (Silverson L4R) to produce a smooth ink

Following the general procedure described by Gottesfeld et al (J. Electrochem. Soc., Vol. 143, No.1 January 1996, and references therein) the ink was used to screen print a 8cm x 8cm layer onto a Teflon decal blank (to form the electrocatalyst layer) and the dry layer was then applied to a Nafion 112 membrane (available from DuPont de Nemours, Fayetteville, USA).

In order to measure the effect of fibre inclusion into the catalyst layer the electron resistance of the layer was measured, at a constant load, in the x -y plane using a Jandel 4-point Universal Probe (Jandel Engineering Ltd., Leighton Buzzard, UK) fitted with precision ground tungsten carbide probes at a spacing of 1.00mm (± 10 microns). A series of 10 measurements were taken at intervals across the electrocatalyst layer and the results are set out in Table 1. Also shown in the table is the thickness of the electrocatalyst layer, estimated by electron probe microanalysis of sectioned samples of the membrane/electrocatalyst laminate after the electron resistance measurement, and the calculated resistivity of the electrocatalyst layer based on the measured layer thickness.

### EXAMPLE 1

An electrocatalyst ink was prepared as for Comparative Example 1. To the completed ink was added 9.8g of FRC 15 carbon wool (supplied by Le Carbone (Great Britain) Ltd., Portslade, Sussex, UK) and 150g deionised water. The mixture was stirred together and then dispersed using a high shear mixer (Silverson L4R) to form a smooth ink.

The ink was used to screen print a 8cm x 8cm layer onto a Teflon decal blank and the dry electrocatalyst layer was then applied to a Nafion 112 membrane as for Comparative Example 1. The electron resistance of the electrocatalyst layer was evaluated as for Comparative Example 1, and the results are given in Table 1. The electrocatalyst layer thickness and the resistivity are also listed in Table 1.

### EXAMPLE 2

An electrocatalyst ink was prepared as for Comparative Example 1. To the completed ink was added 21.2g of FRC 15 carbon wool (supplied by Le Carbone (Great Britain) Ltd., Portslade, Sussex, UK) and 160g deionised water. The mixture was stirred together and then dispersed using a high shear mixer (Silverson L4R) to form a smooth ink.

The ink was used to screen print a 8cm x 8cm layer onto a Teflon decal blank and the dry electrocatalyst layer was then applied to a Nafion 112 membrane as for Comparative Example 1. The electron resistance of the electrocatalyst layer was evaluated as for Comparative Example 1, and the results are given in Table 1. The electrocatalyst layer thickness and the resistivity are also listed in Table 1.

**Table 1**

| Example Number | Measured Resistance ohms | Area Resistance ohm cm² | Thickness cm | Resistivity ohm cm |
|---|---|---|---|---|
| Comparative Example 1 | 0.1800 | 1.41 x10⁻⁵ | 7.00 x10⁻⁴ | 2.02 x10⁻² |
| Example 1 | 0.1320 | 1.04 x10⁻⁵ | 2.20 x10⁻³ | 4.71 x10⁻³ |
| Example 2 | 0.1200 | 9.42 x 10⁻⁶ | 1.60 x10⁻³ | 5.89 x10⁻³ |

The results in Table 1 show that the addition of carbon wool to the electrocatalyst layer results in a decrease in the resistivity of the layer (i.e. an increase in the conductivity of the layer) over that of the unmodified electrocatalyst layer. Thus the addition of carbon fibres of a length significantly greater than that of the catalyst particles within the electrocatalyst layer does result in an improvement in the electron conductivity of the electrocatalyst layer.

## Claims

1. A process for preparing an electrocatalyst layer comprising applying an electrocatalyst ink to a substrate, wherein the electrocatalyst ink comprises one or more electrocatalyst metals and one or more proton-conducting polymers, **characterised in that** the electrocatalyst ink further comprises an electron-conducting fibrous material.

2. A process according to claim 1, wherein the substrate is a gas diffusion substrate.

3. A process according to claim 1, wherein the substrate is a solid polymer electrolyte membrane.

4. A process according to claim 1, wherein the substrate is a Teflon decal blank.

5. A process according to any preceding claim, wherein the fibrous material contacts two or more aggregates of electrocatalyst.

6. A process according to any preceding claim, wherein the fibrous material comprises electrically conducting fibres.

7. A process according to claim 6, wherein the electrically conducting fibres have bulk electrical resistivities in the range of 1x10⁻² to 1x10⁻⁵ ohm cm.

8. A process according to claim 6 or 7, wherein the electrically conducting fibres are of average length less than 2.0mm.

9. A process according to any one of claims 6, 7 or 8, wherein the electrically conducting fibres have an average minimum length of 50 microns (µm).

10. A process according to any one of claims 6 to 9, wherein the diameter of the fibres is in the range of 0.1 microns (µm) to 20 microns (µm).

11. A process according to any preceding claim which further comprises the step of preparing the clectrocatalyst ink by a process comprising mixing the one or more electrocatalyst metals with the one or more proton-conducting polymers and the electron conducting fibrous material in a liquid medium, which may be aqueous or organic.

## Patentansprüche

1. Verfahren zur Herstellung einer Elektrokatalysatorschicht durch Aufbringung einer Elektrokatalysatortinte auf ein Substrat, wobei die Elektrokatalysatortinte ein oder mehr Elektrokatalysatormetalle und ein oder mehr protonenleitende Polymere enthält, **dadurch gekennzeichnet, dass** die Elektrokatalysatortinte ferner ein elektronenleitendes Fasermaterial enthält.

2. Verfahren nach Anspruch 1, worin das Substrat ein Gasdiffusionssubstrat ist.

3. Verfahren nach Anspruch 1, worin das Substrat eine feste Polymerelektrolytmembran ist.

4. Verfahren nach Anspruch 1, worin das Substrat ein Abziehzuschnitt aus Teflon (Teflon decal blank) ist.

5. Verfahren nach einem der vorhergehenden Ansprüche, worin das Fasermaterial zwei oder mehr Aggregate des Elektrokatalysators kontaktiert.

6. Verfahren nach einem der vorhergehenden Ansprüche, worin das Fasermaterial elektrisch leitende Fasern enthält.

7. Verfahren nach Anspruch 6, worin die elektrisch leitenden Fasern elektrische Widerstände als Bulk-Ware im Bereich von 1 x 10⁻² bis 1 x 10⁻⁵ Ohm cm aufweisen.

8. Verfahren nach Anspruch 6 oder 7, worin die elektrisch leitenden Fasern eine mittlere Länge von weniger als 2,0 mm aufweisen.

9. Verfahren nach einem der Ansprüche 6, 7 oder 8, worin die elektrisch leitenden Fasern eine mittlere minimale Länge von 50 Mikron (µm) aufweisen.

10. Verfahren nach einem der Ansprüche 6 bis 9, worin der Durchmesser der Fasern im Bereich von 0,1 Mikron (µm) bis 20 Mikron (µm) liegt.

11. Verfahren nach einem der vorhergehenden Ansprüche, das ferner die Stufe der Herstellung der Elektrokatalysatortinte nach einem Verfahren umfasst, durch welches ein oder mehr Elektrokatalysatormetalle mit ein oder mehr protonenleitenden Polymeren und dem elektronenleitenden Fasermaterial in einem flüssigen Medium vermischt werden, das ein wässriges oder organisches Medium sein kann.

## Revendications

1. Procédé de préparation d'une couche électrocatalytique comprenant l'étape consistant à appliquer une encre électrocatalytique sur un substrat, dans lequel l'encre électrocatalytique comprend un ou plusieurs métaux électrocatalytiques et un ou plusieurs polymères conducteurs de protons, **caractérisé en ce que** l'encre électrocatalytique comprend en outre un matériau fibreux conducteurs d'électrons.

2. Procédé selon la revendication 1, dans lequel le substrat est un substrat à diffusion des gaz.

3. Procédé selon la revendication 1, dans lequel le substrat est une membrane électrolytique solide polymère.

4. Procédé selon la revendication 1, dans lequel le substrat est un blanc de décalcomanie en téflon.

5. Procédé selon l'une quelconque des revendications précédentes, dans lequel le matériau fibreux est en contact avec deux ou plusieurs agrégats d'électrocatalyseurs.

6. Procédé selon l'une quelconque des revendications précédentes, dans lequel le matériau fibreux comprend des fibres électriquement conductrices.

7. Procédé selon la revendication 6, dans lequel les fibres électriquement conductrices ont des résistivités électriques internes comprises dans la plage allant de 1x10⁻² à 1x10⁻⁵ ohm cm.

8. Procédé selon la revendication 6 ou 7, dans lequel les fibres électriquement conductrices ont une longueur moyenne inférieure à 2,0 mm.

9. Procédé selon l'une quelconque des revendications 6, 7 ou 8, dans lequel les fibres électriquement conductrices ont une longueur minimale moyenne de 50 microns (µm).

10. Procédé selon l'une quelconque des revendications 6 à 9, dans lequel le diamètre des fibres est compris dans la plage allant de 0,1 microns (µm) à 20 microns (µm).

11. Procédé selon l'une quelconque des revendications précédentes qui comprend en outre l'étape consistant à préparer l'encre électrocatalytique par un procédé comprenant le mélange du ou des métaux électrocatalytiques avec le ou les polymères conducteurs de protons et avec le matériau fibreux conducteur d'électrons dans un milieu liquide, qui peut être aqueux ou organique.
